(19) Europäisches Patentamt
European Patent Office
Office européen des brevets

(11) EP 4 693 553 A2

(12) **EUROPEAN PATENT APPLICATION**

(43) Date of publication:
**11.02.2026 Bulletin 2026/07**

(21) Application number: **25183997.3**

(22) Date of filing: **19.06.2025**

(51) International Patent Classification (IPC):
***H01M 10/052*** *(2010.01)* ***H01M 10/0567*** *(2010.01)*
***H01M 10/0569*** *(2010.01)* ***H01M 10/0587*** *(2010.01)*

(52) Cooperative Patent Classification (CPC):
**H01M 10/0587; H01M 10/052; H01M 10/0567; H01M 10/0569;** H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.08.2024 KR 20240106695**

(71) Applicant: **SAMSUNG SDI CO., LTD.**
**Yongin-si, Gyeonggi-do 17084 (KR)**

(72) Inventors:
- **Bae, Tae Hyon**
  **Yongin-si, Gyeonggi-do 17084 (KR)**
- **Lee, Harim**
  **Yongin-si, Gyeonggi-do 17084 (KR)**
- **Kim, Sanghyung**
  **Yongin-si, Gyeonggi-do 17084 (KR)**
- **Son, Seunghyeon**
  **Yongin-si, Gyeonggi-do 17084 (KR)**
- **Lee, Sangheon**
  **Yongin-si, Gyeonggi-do 17084 (KR)**
- **Kim, Cheonsoo**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(54) **BATTERY CELL AND RECHARGEABLE LITHIUM BATTERY INCLUDING THE SAME**

(57) A rechargeable lithium battery includes a battery cell, wherein the battery cell includes: a wound electrode assembly, wherein the wound electrode assembly includes a positive electrode, a negative electrode, and a separator between the positive electrode and the negative electrode; and an electrolyte solution impregnated in the wound electrode assembly. The wound electrode assembly includes a pair of curved parts on opposite sides thereof, and a flat part between the pair of curved parts. The electrolyte solution includes a non-aqueous organic solvent, a lithium salt, and an additive, and the non-aqueous organic solvent includes ethylene carbonate and ethyl propionate.

EP 4 693 553 A2

## Description

## BACKGROUND

### 1. Field

Embodiments of the present disclosure described herein are related to a battery cell and a rechargeable lithium battery including the battery cell.

### 2. Description of Related Art

Recently, with the rapid proliferation of battery-using electronic devices, such as mobile phones and/or laptop computers, as well as electric vehicles, the demand or desire for rechargeable batteries with relatively high energy density and relatively high capacity has significantly increased. Accordingly, research and development efforts have been actively directed toward improving the performance of rechargeable lithium batteries.

A rechargeable lithium battery includes a positive electrode and a negative electrode, each containing an active material capable of intercalating and deintercalating lithium ions, and an electrolyte solution. Electrical energy is produced by oxidation and reduction reactions when lithium ions are intercalated and deintercalated into/from the positive and negative electrodes.

A lithium salt is dissolved in a non-aqueous organic solvent is used as an electrolyte for these rechargeable lithium batteries. The battery characteristics are influenced by complex reactions (e.g., oxidation and reduction reactions) between the positive electrode and the electrolyte, the negative electrode and the electrolyte, and other interactions. Therefore, the use of a suitable electrolyte is an important or critical factor in improving the performance of rechargeable lithium batteries.

## SUMMARY

The invention is defined by the appended claims. The description that follows is subjected to this limitation. Any disclosure lying outside the scope of said claims is only intended for illustrative as well as comparative purposes.

Aspects according to one or more embodiments are directed toward a battery cell having (with) reduced side reactions while having relatively high energy density.

Aspects according to one or more embodiments are directed toward a pouch-type (kind) rechargeable lithium battery including the battery cell.

In one or more embodiments of the present disclosure, a battery cell includes a wound electrode assembly, wherein the wound electrode assembly includes a positive electrode, a negative electrode, and a separator between the positive electrode and the negative electrode; and

an electrolyte solution impregnated in the wound electrode assembly.

The negative electrode includes a negative electrode current collector, a negative electrode active material layer on at least one surface of the negative electrode current collector, and a negative electrode tab on an uncoated part of the negative electrode current collector.

The wound electrode assembly includes a pair of curved parts respectively positioned on both surfaces (e.g., opposite surfaces) of the electrode assembly, and a flat part between the pair of curved parts.

The ratio of the area of the negative electrode active material layer in the pair of curved parts to the total area of the negative electrode active material layer is 18% to 50%.

The electrolyte solution includes a non-aqueous organic solvent, a lithium salt, and an additive.

The non-aqueous organic solvent includes ethylene carbonate and ethyl propionate.

The ratio of the volume of the ethylene carbonate to the total volume of the non-aqueous organic solvent is 20 vol% to 50 vol%.

The ratio of the volume of the ethyl propionate to the total volume of the non-aqueous organic solvent is 50 vol% to 80 vol%.

The electrolyte may further include an impregnation improver. An amount of the impregnation improver may be 1 part by weight to 10 parts by weight based on 100 parts by weight of the electrolyte solution.

## BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of disclosure. In the drawings:

FIG. 1 is a conceptual diagram illustrating a rechargeable lithium battery according to one or more embodiments of the present disclosure;
FIG. 2 is a schematic diagram illustrating a pouch-type (kind) rechargeable lithium battery according to one or more embodiments;
FIG. 3 is a schematic diagram illustrating an electrode assembly before winding according to one or more embodiments;
FIG. 4 is a more detail drawing illustrating an electrode assembly before winding according to one or more embodiments;
FIG. 5 is a schematic diagram illustrating a wound electrode assembly according to one or more embodiments;
FIG. 6 is a cross-sectional view taken along the line A-A' of the electrode assembly illustrated in FIG. 5;
FIG. 7 is a schematic diagram, in one direction, illustrating a wound electrode assembly according to one or more embodiments;
FIG. 8 is a schematic diagram illustrating a negative electrode before winding according to one or more embodiments;
FIG. 9 is a schematic diagram illustrating an electrode assembly after winding according to one or more embodiments;
FIG. 10 shows evaluation results according to an evaluation example;
FIG. 11 is a schematic diagram illustrating a stress distribution of a wound electrode assembly; and
FIG. 12 shows evaluation results according to an evaluation example.

## DETAILED DESCRIPTION

In order to sufficiently understand the configuration and effect of the present disclosure, one or more embodiments of the present disclosure will be described in more detail with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of disclosure.

In this description, it will be understood that, if (e.g., when) an element is referred to as being on another element, the element can be directly on the other element or intervening elements may be present between therebetween. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form may include the expression of plural form. The terms "comprises/includes" and/or "comprising/including" used in this disclosure do not exclude the presence or addition of one or more other components.

As used herein, the term "combination thereof" may refer to a mixture, a stack, a composite, a copolymer, an alloy, a blend, or a reaction product.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Unless otherwise especially defined in this description, a particle diameter may be an average particle diameter. When particles are spherical, "size" or "diameter" indicates a particle diameter or an average particle diameter, and when the particles are non-spherical, the "size" or "diameter" indicates a major axis length or an average major axis length. In addition, a particle diameter indicates an average particle diameter ($D_{50}$) where a cumulative volume is 50 volume % in a particle size distribution. The average particle diameter ($D_{50}$) may be measured by a method suitable to those skilled in the art, for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

In this description, unless otherwise separately defined, the term "substituted" may refer to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, a cyano group, and/or a (e.g., any suitable)

combination thereof.

In more detail, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluomethyl group, or a naphthyl group.

In this specification, a "fluoroalkyl group" refers to an alkyl group in which some or all hydrogen atoms are substituted with fluorine atoms.

In this specification, a "haloalkyl group" refers to an alkyl group in which some or all hydrogen atoms are substituted with halogen atoms.

FIG. 1 illustrates a simplified conceptual diagram showing a rechargeable lithium battery according to one or more embodiments of disclosure. Referring to FIG. 1, a rechargeable lithium battery includes a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

**Positive Electrode 10**

The positive electrode 10 for a rechargeable lithium battery includes a current collector COL1 and a positive electrode active material layer AML1 formed on the current collector COL1. The positive electrode active material layer AML1 may include a positive electrode active material and further include a binder and/or a conductive material.

An amount of the positive electrode active material may be 90 wt% to 99.5 wt% relative to 100 wt% of the positive electrode active material layer AML1. An amount of each of the binder and the conductive material may be 0.5 wt% to 5 wt% relative to 100 wt% of the positive electrode active material layer AML1.

The binder may improve attachment of positive electrode active material particles to each other and may also improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

The conductive material may be used to provide an electrode with conductivity (e.g., electrical conductivity), and any suitable conductive material that does not cause a chemical change in a battery may be used as the conductive material (e.g., electrical conductor). The conductive material may include, for example, a carbon-based material such as natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; and/or a (e.g., any suitable)mixture thereof.

Aluminum (Al) may be used as the current collector COL1, but the present disclosure is not limited thereto.

**Positive Electrode Active Material**

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is selected from among cobalt, manganese, nickel, and/or a (e.g., any suitable) combination thereof.

The composite oxide may include lithium transition metal composite oxide, for example, lithium-nickel-based

oxide, lithium-cobalt-based oxide, lithium-manganese-based oxide, lithium-iron-phosphate-based compounds, cobalt-free nickel-manganese-based oxide, and/or a (e.g., any suitable) combination thereof.

For example, the positive electrode active material may include a compound expressed by one of (e.g., at least one selected from among) chemical formulae. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ (where $0.90 \leq a \leq 1.8$, $0 \leq b \leq 0.5$, $0 \leq c \leq 0.5$, and $0 < \alpha < 2$); $Li_aNi_bCo_cL^1_dG_eO_2$ (where $0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90 \leq a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90 \leq a \leq 1.8$).

In the chemical formulae above, A is Ni, Co, Mn, and/or a (e.g., any suitable) combination thereof, X is Al, Ni, Co, Mn, Cr, Fe, Mg, Sr, V, a rare-earth element, and/or a (e.g., any suitable) combination thereof, D is O, F, S, P, and/or a (e.g., any suitable) combination thereof, G is Al, Cr, Mn, Fe, Mg, La, Ce, Sr, V, and/or a (e.g., any suitable) combination thereof, and $L^1$ is Mn, Al, and/or a (e.g., any suitable) combination thereof.

For example, the positive electrode active material may be a high-nickel-based positive electrode active material having a nickel amount of equal to or greater than 80 mol%, equal to or greater than 85 mol%, equal to or greater than 90 mol%, equal to or greater than 91 mol%, or equal to or greater than 94 mol% and equal to or less than 99 mol% relative to 100 mol% of metal devoid of lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery includes a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 may include a negative electrode active material of 90 wt% to 99 wt%, a binder of 0.5 wt% to 5 wt%, and a conductive material of 0 wt% to 5 wt% based on a total 100 wt% of the negative electrode active material layer AML2.

The binder may improve attachment of negative electrode active material particles to each other and also improve attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth) acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material may be used to provide an electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from among Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx (where $0<x<2$), Si-Q alloy (where Q is alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, $SnO_2$, a Sn-based alloy, and/or a (e.g., any suitable) combination thereof.

The silicon-carbon composite may be a composite of silicon and amorphous carbon. According to one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

### Separator 30

Based on type (kind) of the rechargeable lithium battery, the separator 30 is between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, which coating layer includes an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, and polytetrafluoroethylene (e.g., Teflon), or may be a copolymer or mixture including two or more of the materials mentioned above.

The organic material may include a polyvinylidenefluoride-based copolymer or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but the present disclosure is not limited thereto.

The organic material and the inorganic material may be mixed in one coating layer or may be a stack of a coating layer including the organic material and a coating layer including an inorganic material.

### Electrolyte ELL

The electrolyte ELL for a rechargeable lithium battery includes a non-aqueous organic solvent and a lithium salt.

The non-aqueous organic solvent may be a medium for transmitting ions that participate in an electrochemical

reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The non-aqueous organic solvent includes at least ethylene carbonate (EC) as a carbonate-based solvent and ethyl propionate (EP) as an ester-based solvent.

The carbonate-based solvent may further include dimethyl carbonate (DMC), diethyl carbonate (DEC), dipropyl carbonate (DPC), methylpropyl carbonate (MPC), ethylpropyl carbonate (EPC), methylethyl carbonate (MEC), propylene carbonate (PC), or butylene carbonate (BC).

The ester-based solvent may further include methyl acetate, ethyl acetate, n-propyl acetate, dimethyl acetate, methyl propionate, decanolide, mevalonolactone, valerolactone, caprolactone, or propyl propionate (PP).

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include ethyl alcohol or isopropyl alcohol. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, if (e.g., when) a carbonate-based solvent is used, a cyclic carbonate and a chain carbonate may be mixed and used, and the cyclic carbonate and the chain carbonate may be mixed in a volume ratio of 1:1 to 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB)

Hereinafter, an electrolyte solution of a battery cell according to one or more embodiments of the present disclosure will be described in more detail.

The electrolyte solution according to one or more embodiments may include a non-aqueous organic solvent; a lithium salt; an impregnation improver; and an additive.

The electrolyte solution may be prepared through a mixed process in which the lithium salt is dissolved in the non-aqueous organic solvent, and the impregnation improver and the additive are added thereto. A mixing process of the electrolyte solution, which is suitable in the field of preparing the electrolyte solution, may be appropriately or suitably selected and used by those skilled in the art.

The electrolyte solution according to the present disclosure may have high ionic conductivity. By adjusting the non-aqueous organic solvent, the lithium salt, the impregnation improver, and the additive to have the optimal or suitable composition, the electrolyte solution with high lithium-ion conductivity may be prepared. In one or more embodiments, the electrolyte solution may have an ionic conductivity of 7.2 mS/cm to 7.7 mS/cm.

The electrolyte solution according to the present disclosure may have high impregnation property for a positive electrode and a negative electrode. The electrolyte solution may exhibit excellent or suitable performance particularly if (e.g., when) it is used for a battery which is not well or not suitably impregnated with an electrolyte solution due to high mixture density of a positive electrode and/or negative electrode. Also, the electrolyte solution may exhibit excellent or suitable performance, for example, if (e.g., when) it is used for a battery having a structure that is not well or not suitably impregnated with an electrolyte solution due to increased stress in the battery.

The non-aqueous organic solvent includes ethylene carbonate (EC) and ethyl propionate (EP).

The ratio of the volume of the ethylene carbonate (EC) to the total volume of the non-aqueous organic solvent is 20 vol% to 50 vol%. Ethylene carbonate (EC) may function to supplement lithium ions by dissociating the lithium salt in the electrolyte solution. For example, ethylene carbonate (EC) may dissociate the lithium salt ($LiPF_6$) into $Li^+$ and $PF_6^-$. Because the dissociated lithium ions become a source of lithium ions in the battery, the ionic conductivity of the battery may increase. Because ethylene carbonate (EC) is a high-viscosity organic solvent, if the volume exceeds the above range, there may be a problem that side reactions become dominant.

The ratio of the volume of the ethyl propionate (EP) to the total volume of the non-aqueous organic solvent is 50 vol% to 80 vol%. Ethyl propionate (EP) may function to improve impregnation property of the electrolyte solution and improve electrical conductivity. Because ethylene carbonate (EC) is a material having a high melting point, if (e.g., when) it is used in an excessive amount, the ionic conductivity of the electrolyte solution may be decreased at low temperature. By mixing ethyl propionate (EP) that is a material with excellent or suitable impregnation property and high ionic conductivity in a certain volume, the shortcomings of ethylene carbonate (EC) may be compensated for, and the high ionic conductivity of

the electrolyte solution may be maintained even at a low temperature. The low temperature may refer to 40 °C or less, 35°C or less, 30°C or less, or 15°C or less. In this context and unless defined otherwise, the term "ratio" refers to the proportion of one quantity to another, expressed as a percentage. Here, it describes the proportion of the volume of ethylene carbonate (EC) or ethyl propionate (EP) to the total volume of the non-aqueous organic solvent. For ethylene carbonate (EC), the ratio is 20% to 50% of the total volume of the non-aqueous organic solvent. This means that EC makes up 20% to 50% of the total solvent volume. For ethyl propionate (EP), the ratio is 50% to 80% of the total volume of the non-aqueous organic solvent. This means that EP constitutes 50% to 80% of the total solvent volume.

In one or more embodiments, the non-aqueous organic solvent may include ethylene carbonate (EC), propylene carbonate (PC), and ethyl propionate (EP).

In one or more embodiments, the non-aqueous organic solvent may include ethylene carbonate (EC), propylene carbonate (PC), ethyl propionate (EP), and propyl propionate (PP).

In one or more embodiments, the lithium salt according to the present disclosure may be one or more selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, lithium bis(fluorosulfonyl)imide ($Li(FSO_2)_2N$, LiFSI), $LiC_4F_9SO_3$, $LiN(C_xF_{2x+1}SO_2)(C_yF_{2y+1}SO_2)$ (where, x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

In one or more embodiments, the lithium salt may include $LiPF_6$.

The lithium salt may have a concentration of 0.1 M to 2.0 M. For example, the concentration of the lithium salt may be 1.0 M or greater, 1.4 M or greater, and 1.5 M or greater. The concentration of the lithium salt may be 2.0 M or less, 1.8 M or less, and 1.6 M or less. When the concentration of the lithium salt falls within the above-described ranges, the viscosity of the electrolyte solution may be maintained in an appropriate or suitable level, and the ionic conductivity may be excellent or suitable.

The impregnation improver according to the present disclosure may include a compound represented by Formula 1.

Formula 1 $R_1\text{-O-}R_1$

In Formula 1 above,

$R_1$ is each independently a fluorine atom, a C1 to C10 alkyl group, or a C1 to C10 fluoroalkyl group.

In one or more embodiments, the impregnation improver may include a compound represented by Formula 2 or Formula 3.

Formula 2

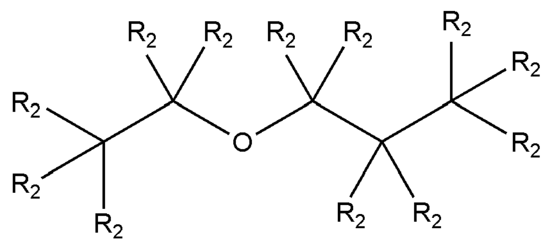

In Formula 2 above,

$R_2$ is each independently a hydrogen atom or a fluorine atom, and
at least one $R_2$ is a fluorine atom.

Formula 3

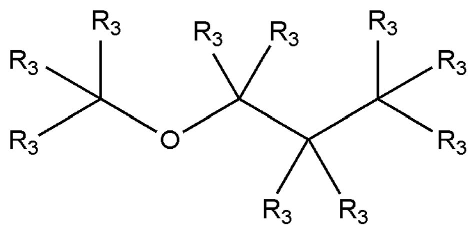

In Formula 3 above,

$R_3$ is each independently a hydrogen atom or a fluorine atom, and
at least one $R_3$ is a fluorine atom.

In one or more embodiments, in Formula 2 above, at least four $R_2$ may be fluorine atoms, and in Formula 3 above, at least four $R_3$ may be fluorine atoms.

In one or more embodiments, in Formula 2 above, at least eight $R_2$ may be fluorine atoms, and in Formula 3 above, at least eight $R_3$ may be fluorine atoms.

In one or more embodiments, the impregnation improver may include a compound represented by Formula 4 or Formula 5.

Formula 4

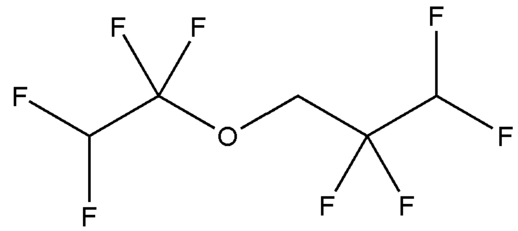

Formula 5

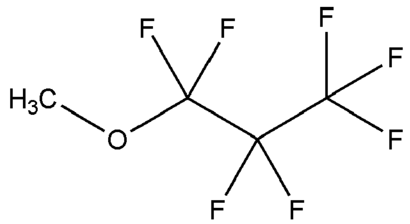

The impregnation improver has an ether-group structure. An oxygen atom, positioned at the center of the ether-group structure, may make the impregnation improver hydrophilic. Branch portions, other than the oxygen at the center of the ether-group structure, may make the impregnation improver hydrophobic.

The impregnation improver, which has amphipathic property, may allow the electrolyte solution to be well or suitably impregnated into the positive electrode and the negative electrode. When the impregnation property of the electrolyte solution is improved, uniform (e.g., substantially uniform) electrochemical reactions may occur in charging/-discharging of a battery, thereby reducing side reactions of the battery.

An amount of the impregnation improver may be 1 part by weight to 10 parts by weight on the basis of 100 parts by weight of the electrolyte solution. In one or more embodiments, the amount may be 2 parts by weight to 9 parts by weight. In one or more embodiments, the amount may be 3 parts by weight to 7 parts by weight. When the amount added exceeds the above-described content (e.g., amount) ranges, resistance caused by the impregnation improver itself becomes too high, thereby increasing side reactions of the battery. When the amount added is less than the above-described content (e.g., amount) ranges, the electrolyte solution may not be sufficiently or suitably impregnated into the positive electrode and the negative electrode.

In one or more embodiments, the additive according to the present disclosure may be a compound represented by Formula 6.

Formula 6

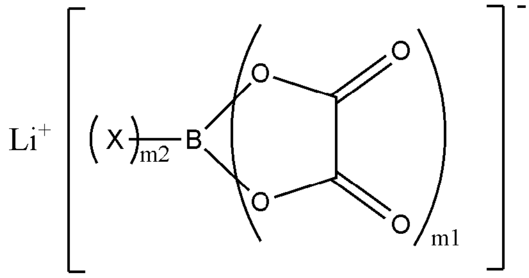

In Formula 6 above,

X is halogen, or a C1 to C10 haloalkyl group,
m1 is 1 or 2,
m2 is 2 if (e.g., when) m1 is 1, and
m2 is 0 if (e.g., when) m1 is 2.

In one or more embodiments, the additive may be lithium difluoro(oxalato)borate (LiDFOB). Because the additive functions to form a passive film on the negative electrode, side reactions occurring on an interface between the negative electrode and the electrolyte solution may be reduced.
In one or more embodiments, the additive may be lithium bis(oxalato)borate (LiBOB).
An amount of the additive may be 1 part by weight to 10 parts by weight on the basis of 100 parts by weight of the electrolyte solution. In one or more embodiments, the amount may be 1 part by weight to 5 parts by weight. In one or more embodiments, the amount may be 1 part by weight to 3 parts by weight. When the amount added exceeds the above content (e.g., amount) ranges, resistance caused by the additive itself may become too high, thereby decreasing the ionic conductivity of the electrolyte solution.

**Battery Cell**

Hereinafter, a battery cell according to present disclosure will be described in more detail with reference to FIGS. 3 to 9. The battery cell according to the present disclosure includes a wound electrode assembly and an electrolyte solution. The electrode assembly includes a positive electrode, a negative electrode, and a separator arranged between the positive electrode and the negative electrode.
Referring to FIGS. 3 to 5, the electrode assembly may be provided in such a way that a positive electrode 10, a separator 30, and a negative electrode 20 may be stacked and wound around a winding axis, and then pressed in a normal direction to a relatively flat plane (e.g., in a direction reverse to an axis D1 depicted in FIG. 5).
FIG. 3 is a schematic diagram illustrating an electrode assembly before winding. The order in which the positive electrode 10 and the negative electrode 20 are stacked may be reversed. For example, the stack may be formed in the order of the negative electrode 20, the separator 30, and the positive electrode 10.
FIG. 4 is a detail drawing illustrating an electrode assembly before winding. Referring to FIG. 4, the negative electrode 20 includes a negative electrode current collector COL2, a negative electrode active material layer AML2, and a negative electrode tab TAB2. The negative electrode active material layer AML2 may be formed on at least one surface of the negative electrode current collector COL2. For example, the negative electrode active material layer AML2 may be formed on a (e.g., one) side or surface of the negative electrode current collector COL2, and may also be formed on both sides or surfaces (e.g., opposite sides) thereof. The negative electrode tab TAB2 may be formed on an uncoated part of the negative electrode current collector COL2. The uncoated part may refer to a portion on the negative electrode current collector COL2 where the negative electrode active material layer AML2 is not formed. For example, the negative electrode tab TAB2 may be spaced and/or apart (e.g., spaced apart) from the negative electrode active material layer AML2 along the negative electrode current collector COL2. One or more negative electrode tabs TAB2 may be formed. For example, the negative electrode tab TAB2 may be two.
The positive electrode 10 may include a positive electrode current collector COL1, a positive electrode active material layer AML1, and a positive electrode tab TAB1. The positive electrode active material layer AML1 may be formed on at least one surface of the positive electrode current collector COL1. For example, the positive electrode active material layer AML1 may be formed on one surface of the positive electrode current collector COL1, and may also be formed on both sides (e.g., opposite sides) thereof. The positive electrode tab TAB1 may be formed on an uncoated part of the positive electrode current collector COL1. The uncoated part may refer to a portion on the positive electrode current collector COL1 where the positive electrode active material layer AML1 is not formed. For example, the positive electrode tab TAB1 may be spaced and/or apart (e.g., spaced apart) from the positive electrode active material layer AML1 along the positive electrode current collector COL1. One or more positive electrode tabs TAB1 may be formed. For example, the positive electrode tab TAB1 may be two.
The separator 30 may be arranged between the positive electrode 10 and the negative electrode 20. As needed or desired, the separator 30 may be additionally stacked on the lowermost end. For example, the stack may also be formed in the order of the separator 30, the positive electrode 10, the separator 30, and the negative electrode 20. For example, the separator 30 is positioned between the positive electrode 10 and the negative electrode 20. It may also be stacked at the bottom if needed. For instance, the stack can be arranged as separator 30, positive electrode 10, separator 30, and negative electrode 20.
In one or more embodiments, the negative electrode current collector COL2 may be longer than the positive electrode current collector COL1 in a width direction (e.g., a direction parallel to a D2 axis). In one or more embodiments,

the negative electrode active material layer AML2 may be formed longer than the positive electrode active material layer AML1 in the width direction (e.g., a direction parallel to a D2 axis). In one or more embodiments, the lengths of the separator 30, the positive electrode current collector COL1, and the negative electrode current collector COL2 may not be uniform (e.g., not substantially uniform) in the width direction. For example, in order to prevent or reduce formation of lithium dendrite, the negative electrode active material layer AML2 may be formed to be longer than the positive electrode active material layer AML1.

FIG. 5 is a schematic diagram illustrating a wound electrode assembly. Referring to FIG. 5, the electrode assembly may include a flat part FLT and a pair of curved parts RND. The outer circumferential surfaces of the pair of curved parts RND may be relatively round, compared to that of the flat part FLT. The pair of curved parts RND may be respectively positioned on both sides (e.g., opposite sides) RND1 and RND2 of the wound electrode assembly. The flat part FLT may be positioned between the pair of curved parts RND. For example, the flat part FLT may be between curved parts RND1 and RND2.

FIG. 6 is a cross-sectional view taken along the line A-A' of the electrode assembly illustrated in FIG. 5. Line A-A' may be a straight line (e.g., a random straight line) parallel to the width direction (e.g., a direction of a D2 axis) of the electrode assembly. The pair of curved parts RND may refer to one portion of the electrode assembly in which the outer circumferential surface of the wound electrode assembly has a curvature of 1 $m^{-1}$ to 1,000 $m^{-1}$. The flat part FLT may refer to another portion of the electrode assembly in which the pair of curved parts RND are excluded (e.g., not included) from the wound electrode assembly. For example, the flat part FLT may be between the curved parts RND1 and RND2.

In the present specification, the term "curvature" refers to a geometric parameter used to distinguish the curved part (RND) and the flat part (FLT) of the cross-section of a jelly-roll type electrode assembly, as illustrated in FIG. 6. The curved part (RND) corresponds to the rounded portions located at both ends of the elliptical outer circumference of the wound electrode assembly, and includes regions where the curvature of the outer circumferential surface falls within a range of approximately 1 $m^{-1}$ to 1000 $m^{-1}$.

The curvature is defined based on the radius (R) of the outer surface, according to the relationship $\kappa = 1/R$. In this specification, regions having a curvature within the above range are regarded as the curved part (RND), while the remaining regions are defined as the flat part (FLT).

The curvature is calculated by measuring the curved profile of the outer surface along the cross-section (in the A-A' direction) of the electrode assembly in its wound and compressed state. The radius of curvature (R) may be measured using, for example, a non-contact laser profilometer or an optical measuring device (e.g., a 3D shape measuring instrument), and the measured value is used to calculate the curvature $\kappa = 1/R$.

Referring to FIG. 7, the ratio of the width ($W_{RND}$) of the pair of curved parts to the width ($W_{ASB}$) of the wound electrode assembly may be 5% to 50%. The width ($W_{RND}$) of the pair of curved parts may be a sum ($W_{RND1}+W_{RND2}$) of the widths of the curved parts respectively positioned on both sides (e.g., opposite sides). In this context and unless defined otherwise, the term "ratio" refers to the relationship between two quantities, expressed as a fraction or percentage. Here, it describes the proportion of the width of the pair of curved parts ($W_{RND}$) to the width of the wound electrode assembly ($W_{ASB}$). This ratio is given as a percentage, ranging from 5% to 50%. To clarify, the width ($W_{RND}$) of the pair of curved parts is the sum of the widths of the curved parts on both sides ($W_{RND1} + W_{RND2}$).

In order to increase energy density, it may be necessary or desirable to increase the ratio of the pair of curved parts in the wound electrode assembly. In the battery cell according to present disclosure, the ratio of 'the area of the negative electrode active material layer in the pair of curved parts' to 'the total area of the negative electrode active material layer' is 18% to 50%. In one or more embodiments, the ratio may be 19% to 40%. In one or more embodiments, the ratio may be 19% to 30%.

Referring to FIGS. 6 to 9, 'the total area of the negative electrode active material layer' may be calculated according to Equation 1.

The total area of negative electrode active material layer = the width of negative electrode active material layer ($W_{AML2}$) $\times$ the length of negative electrode active material layer ($L_{AML2}$) Equation 1

'The area of the negative electrode active material layer in the pair of curved parts' may be calculated according to Equation 2. The length ($L_{ASB}$) of the wound electrode assembly may be equal to the length ($L_{AML2}$) of the negative electrode active material layer. The number of winding turns may refer to the number of times the negative electrode active material layer is wound during the winding. For example, the number of winding turns may be 3 in FIG. 6.

The area of negative electrode active material layer in the pair of curved parts = The total area of negative electrode active material layer - the area of negative electrode active material layer in flat part = {The width of negative electrode active material layer ($W_{AML2}$) $\times$ the length of negative electrode active material layer ($L_{AML2}$)} - {[the width of flat part ($W_{FLT}$) $\times$ the length of wound electrode assembly ($L_{ASB}$) $\times$ the number of winding turns] - [the width of uncoated part of negative electrode current collector in flat part ($W_{UCT}$) $\times$ the length of wound electrode assembly ($L_{ASB}$)]} Equation 2

Referring to FIG. 11, as previously described, if (e.g., when) the ratio of the pair of curved parts is increased, energy density may increase, but increased stress may be generated (portion P) inside the wound electrode assembly. Under this stress, charging and discharging of a battery may not proceed suitably, and side reactions may be increased, so that there may be a limitation in increasing the ratio of the curved parts. By applying an electrolyte solution which is improved or optimized for suppressing or reducing side reactions of a battery, the side reactions may be minimized or reduced even though the battery cell, according to the present disclosure, has a structure in which the ratio of the curved parts is high. Accordingly, high energy density may be achieved or improved.

In the battery cell according to the present disclosure, the negative electrode active material layer AML2 may have a high mixture density. In one or more embodiments, the mixture density may be 1.0 g/cc to 10 g/cc. In one or more embodiments, the mixture density may be 1.65 g/cc to 4.00 g/cc. Due to the high mixture density, the battery may have high energy density.

The positive electrode active material layer AML1 may include a lithium composite oxide represented by Formula 7.

Formula 7 $$Li_xM^1_yM^2_zM^3_{1-y-z}O_{2-a}X_a$$

$0.5 \le x \le 1.8$, $0 \le a \le 0.05$, $0 < y \le 1$, $0 \le z \le 1$, and $0 < y+z \le 1$ may be satisfied,
$M^1$, $M^2$ and $M^3$ may each independently include one or more elements selected from among metal such as Ni, Co, Mn, Al, B, Ba, Ca, Ce, Cr, Fe, Mo, Nb, Si, Sr, Mg, Ti, V, W, Zr, or La, and/or a (e.g., any suitable) combination thereof, and
X may include one or more elements selected from among F, S, P, or Cl.

The negative electrode active material layer AML2 may include a carbon-based negative electrode active material, a Si-based negative electrode active material, a Sn-based negative electrode active material, and/or a (e.g., any suitable) combination thereof.

The battery cell according to present disclosure may exhibit excellent or suitable performance even at a high voltage. The high voltage may be 3.0 V or higher, 3.5 V or higher, 4.0 V or higher, or 4.47 V or higher.

The battery cell according to the present disclosure may be accommodated in a case having one or more suitable outer shapes. For example, the outer shape of the case may include a cylindrical shape, a prismatic shape, and a pouch-type (kind) shape. The battery cell accommodated in the pouch-type (kind) case may be referred to as a pouch-type (kind) rechargeable lithium battery. Structures may be added to suit the outer shape of the case. For example, referring to FIG. 2, a separate electrode tab 70, which is connected to the positive electrode tab TAB1 (see FIG. 4) and the negative electrode tab TAB2 (see FIG. 4), may be added.

The battery cell according to one or more embodiments of the present disclosure may be applied to automobiles, mobile phones, and/or one or more suitable types (kinds) of electric devices, and the present disclosure is not limited thereto.

Hereinafter, examples and comparative examples of the present disclosure will be described. However, the following examples are only embodiments of the present disclosure, and the present disclosure is not limited to the following examples.

### Example 1

#### (1) Preparation of Electrolyte Solution

$LiPF_6$ was dissolved in a non-aqueous organic solvent in which ethylene carbonate (EC), propylene carbonate (PC), ethyl propionate (EP), and propyl propionate (PP) were mixed. As an impregnation improver, a compound, represented by Formula 4, was added. As an additive, a compound containing lithium difluoro(oxalato) borate (LiDFOB) was added to prepare an electrolyte solution.

Formula 4

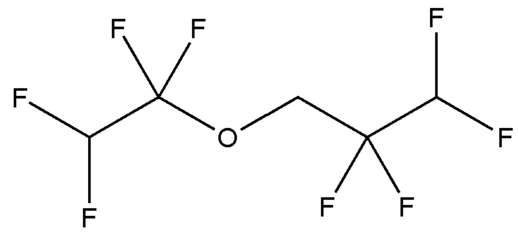

### (2) Preparation of Battery Cell

$LiCoO_2$ as a positive electrode active material, polyvinylidene fluoride as a binder, and Ketjen black as a conductive material were mixed in a weight ratio of 97:2:1, and the mixture was dispersed in an N-methylpyrrolidone to prepare a positive electrode active material slurry.

The slurry was applied onto an aluminum current collector having a thickness of about 14 μm, dried at about 110 °C, and then pressed to prepare a positive electrode.

A mixture in which artificial graphite and silicon nano-particles were mixed in a weight ratio of 93:7 as a negative electrode active material, a styrene-butadiene rubber (SBR) as a binder, and carboxymethyl cellulose (CMC) as a thickener were mixed in a weight ratio of 97:1:2, and dispersed in distilled water to prepare a negative electrode active material slurry.

The negative electrode active material slurry was applied onto a copper current collector having a thickness of about 10 μm, dried at about 100 °C, and then pressed to prepare a negative electrode.

The positive electrode, the negative electrode, and a polyethylene separator having a thickness of about 10 μm were wound, and then pressed to prepare an electrode assembly. An electrolyte solution was injected to prepare a battery cell.

Characteristics of the electrode assembly and composition of the electrolyte solution were listed in Table 1.

### Example 2 to Example 7

Example 2 to Example 7 were performed. An electrolyte solution and a battery cell were prepared in the same (e.g., substantially the same) manner as that of Example 1 except that characteristics of an electrode assembly and/or composition of an electrolyte solution were applied differently. Characteristics of the electrode assembly and composition of the electrolyte solution for each example performance were listed in Table 1.

### Comparative Example 1 to Comparative Example 5

Comparative Example 1 to Comparative Example 5 were performed. An electrolyte solution and a battery cell were prepared in the same (e.g., substantially the same) manner as that of Example 1 except that characteristics of an electrode assembly and/or composition of an electrolyte solution were applied differently. Characteristics of the electrode assembly and composition of the electrolyte solution for each performance were listed in Table 1.

### Evaluation Example 1: Evaluation on Low-Temperature Lifespan

The battery cells according to the examples and comparative examples were accommodated in pouch-type (kind) battery housing to prepare pouch-type (kind) rechargeable lithium batteries. The batteries were charged under conditions of '25 °C, 0.2 C, 4.47 V, and 0.02 C cut-off, and initial-battery characteristic values were measured. A cycle of charging and discharging was performed 50 times, and then the battery characteristic values were measured. The condition of charging was '15 °C, 2 C, 4.47 V, and 0.1 C cut-off. The condition of discharging was '15 °C, 1 C, and 3.0 V cut-off". The capacity retention rate was calculated according to Equation 3. DCIR was measured by applying 1 C current for about 10 seconds and using "dR=dV/dI". The results were listed in Table 2.

$$\text{Capacity retention rate (\%)} = (\text{Discharge capacity after 50 cycles/Initial discharge capacity}) \times 100 \qquad \text{Equation 3}$$

### Evaluation Example 2: Evaluation on Side Reaction after Low-Temperature Lifespan

The battery cells according to the examples and comparative examples were accommodated in pouch-type (kind) battery housing to prepare pouch-type (kind) rechargeable lithium batteries. After the evaluation on low-temperature lifespan according to Evaluation Example 1, the batteries were disassembled to check the degree to which side reactions occurred in the negative electrodes. The case of no side reaction was rated as 0 point, and the case of most severe side reactions was rated as 5 points. It was seen that the batteries according to the comparative examples were discolored due to side reactions occurred therein. The results were shown in Table 2 and FIG. 10.

**Evaluation Example 3: Evaluation on Impregnation Property of Electrolyte Solution for Negative Electrode**

A specimen measuring 3 cm in width and 4 cm in height was prepared for the negative electrode according to Example 1. 1 g of the electrolyte solution according to Example 1 was dropped onto the specimen, and the specimen was left to rest for about 1 minute. Thereafter, the amount of the electrolyte solution immersed in the specimen on the basis of 100 wt% of the electrolyte solution dropped onto the specimen was rated on a numerical scale of 1 to 5 according to the criteria that will be described further.

For the examples and comparative examples other than Example 1, evaluations were also conducted in the same (e.g., substantially the same) method. The results were shown in FIG 12.

0: the case where the amount of electrolyte solution immersed in the specimen is 0 wt% or greater and less than 10 wt%.

1: the case where the amount of electrolyte solution immersed in the specimen is 10 wt% or greater and less than 20 wt%.

2: the case where the amount of electrolyte solution immersed in the specimen is 20 wt% or greater and less than 40 wt%.

3: the case where the amount of electrolyte solution immersed in the specimen is 40 wt% or greater and less than 60 wt%.

4: the case where the amount of electrolyte solution immersed in the specimen is 60 wt% or greater and less than 80 wt%.

5: the case where the amount of electrolyte solution immersed in the specimen is 80 wt% or greater and less than 100 wt%.

Table 1

| | Characteristics of electrode assembly | | Composition of electrolyte solution | | | | | | |
|---|---|---|---|---|---|---|---|---|---|
| | Ratio of negative electrode curved parts (A) [%] | Negative electrode mixture density(B) [g/cc] | $LiPF_6$ [M] | EC [vol%] | PC [vol%] | EP [vol%] | PP [vol%] | LiDFOB [parts by weight] | Formul a (conte nt (e.g., amoun t)) [parts by weight] |
| Example 1 | 19 | 1.65 | 1.5 | 20 | 15 | 50 | 15 | 1 | Formul a 4 (5) |
| Example 2 | 19 | 1.65 | 1.5 | 20 | 15 | 50 | 15 | 1 | Formul a 5 (5) |
| Example 3 | 25 | 1.65 | 1.5 | 20 | 15 | 50 | 15 | 1 | Formul a 4 (5) |
| Example 4 | 19 | 1.65 | 1.5 | 30 | 5 | 50 | 15 | 1 | Formul a 4 (5) |
| Example 5 | 19 | 1.65 | 1.5 | 20 | 5 | 70 | 5 | 1 | Formul a 4 (5) |
| Example 6 | 19 | 1.65 | 1.5 | 20 | 15 | 50 | 15 | 1 | Formul a 4 (10) |
| Example 7 | 19 | 1.65 | 1.5 | 20 | 15 | 50 | 15 | 1 | Formul a 5 (10) |
| Comparative Example 1 | 17 | 1.65 | 1.3 | 10 | 15 | 10 | 65 | 0 | 0 |

(continued)

| | Characteristics of electrode assembly | | Composition of electrolyte solution | | | | | | |
|---|---|---|---|---|---|---|---|---|---|
| | Ratio of negative electrode curved parts (A) [%] | Negative electrode mixture density(B) [g/cc] | $LiPF_6$ [M] | EC [vol%] | PC [vol%] | EP [vol%] | PP [vol%] | LiDFOB [parts by weight] | Formul a (conte nt (e.g., amoun t)) [parts by weight] |
| Comparative Example 2 | 19 | 1.6 | 1.3 | 10 | 15 | 10 | 65 | 0 | 0 |
| Comparative Example 3 | 19 | 1.65 | 1.3 | 10 | 15 | 10 | 65 | 0 | 0 |
| Comparative Example 4 | 19 | 1.65 | 1.5 | 20 | 5 | 10 | 65 | 0 | 0 |
| Comparative Example 5 | 19 | 1.65 | 1.3 | 10 | 15 | 10 | 65 | 1 | 0 |

**[00172]** * Ratio of negative electrode curved parts (A) = the ratio of the area of the negative electrode active material layer in the pair of curved parts to the total area of the negative electrode active material layer.
**[00173]** * Negative electrode mixture density (B) = the mixture density of the negative electrode active material layer.

Table 2

| | Capacity retention rate [%] | Degree to which side reaction occurs [point] |
|---|---|---|
| Example 1 | 88.2 | 0 |
| Example 2 | 90.2 | 0 |
| Example 3 | 88.8 | 0 |
| Example 4 | 88.6 | 0 |
| Example 5 | 88.0 | 0 |
| Example 6 | 89.4 | 0 |
| Example 7 | 88.0 | 0 |
| Comparative Example 1 | 85.1 | 0 |
| Comparative Example 2 | 82.5 | 2 |
| Comparative Example 3 | 80.0 | 5 |
| Comparative Example 4 | 84.5 | 3 |
| Comparative Example 5 | 83.0 | 5 |

Referring to Table 1, Table 2, FIG. 10, and FIG. 12, it can be seen that the examples according to the present disclosure showed better results in comparison to the comparative examples in terms of evaluating low-temperature lifespan, side reactions, and impregnation property. For example, it can be seen that the battery cell according to the present disclosure may have less side reactions while maintaining high energy density with fewer side reactions.
A battery cell according to one or more embodiments of the present disclosure may have less side reactions while having high energy density.
A rechargeable lithium battery including the battery cell may have less side reactions while having high energy density.

## Claims

1. A battery cell comprising:

a wound electrode assembly, the wound electrode assembly comprising a positive electrode (10), a negative electrode (20), and a separator (30) between the positive electrode (10) and the negative electrode (20); and an electrolyte solution impregnated in the wound electrode assembly,
wherein the negative electrode (20) comprises a negative electrode current collector (COL2), a negative electrode active material layer (AML2) on at least one surface of the negative electrode current collector (COL2), and a negative electrode tab (TAB2) on an uncoated part of the negative electrode current collector (COL2),
the wound electrode assembly comprises a pair of curved parts (RND) on opposite sides thereof, and a flat part (FLT) between the pair of curved parts (RND),
a ratio of an area of the negative electrode active material layer (AML2) in the pair of curved parts (RND) to a total area of the negative electrode active material layer (AML2) is 18% to 50%,
the electrolyte solution comprises a non-aqueous organic solvent, a lithium salt, an impregnation improver, and an additive,
the non-aqueous organic solvent comprises ethylene carbonate and ethyl propionate,
a ratio of a volume of the ethylene carbonate to a total volume of the non-aqueous organic solvent is 20 vol% to 50 vol%,
a ratio of a volume of the ethyl propionate to the total volume of the non-aqueous organic solvent is 50 vol% to 80 vol%, and
an amount of the impregnation improver is about 1 part by weight to about 10 parts by weight based on 100 parts by weight of the electrolyte solution.

2. The battery cell of claim 1, wherein the impregnation improver comprises a compound represented by Formula 1:

Formula 1 $R_1$-O-$R_1$,

and wherein, in Formula 1,
$R_1$ are each independently a fluorine atom, a C1 to C10 alkyl group, or a C1 to C10 fluoroalkyl group.

3. The battery cell of claim 2, wherein the impregnation improver comprises a compound represented by Formula 2 or Formula 3:

Formula 2

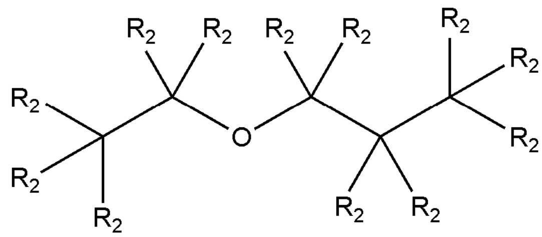

,

wherein, in Formula 2,
$R_2$ are each independently a hydrogen atom or a fluorine atom, and at least one $R_2$ is a fluorine atom.

Formula 3

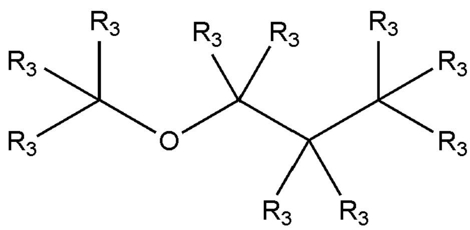

,

and wherein, in Formula 3,

$R_3$ are each independently a hydrogen atom or a fluorine atom, and
at least one $R_3$ is a fluorine atom.

**4.** The battery cell of claim 3, wherein the impregnation improver comprises a compound represented by Formula 4 or Formula 5:

Formula 4

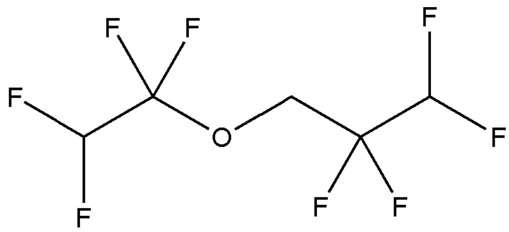

Formula 5

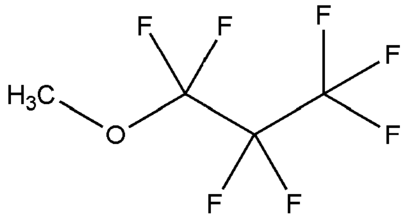

.

**5.** The battery cell of any one of the preceding claims, wherein the additive comprises a compound represented by Formula 6:

Formula 6

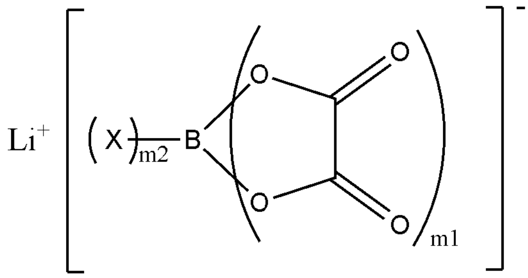

,

and wherein, in Formula 6,

X is halogen, or a C1 to C10 haloalkyl group,
m1 is 1 or 2,
m2 is 2 when m1 is 1, and
m2 is 0 when m1 is 2.

**6.** The battery cell of claim 5, wherein the additive is lithium difluoro(oxalato)borate(LiDFOB).

**7.** The battery cell of any one of the preceding claims, wherein an amount of the additive is 1 part by weight to 10 parts by weight based on 100 parts by weight of the electrolyte solution.

**8.** The battery cell of any one of the preceding claims, wherein the negative electrode active material layer (AML2) is on opposite surfaces of the negative electrode current collector (COL2).

9. The battery cell of any one of the preceding claims, wherein the positive electrode (10) comprises a positive electrode current collector (COL1), a positive electrode active material layer (AML1) on at least one surface of the positive electrode current collector (COL1), and a positive electrode tab (TAB1) on an uncoated part of the positive electrode current collector (COL1).

10. The battery cell of any one of the preceding claims, wherein a ratio of a width of the pair of curved parts (RND) to a width of the wound electrode assembly is 5% to 50%.

11. The battery cell of claim 1, wherein a curvature of each of the pair of curved parts is independently about 1 $m^{-1}$ to about 1000 $m^{-1}$.

12. The battery cell of any one of the preceding claims, wherein the negative electrode active material layer (AML2) has a mixture density of 1.65 g/cc to 4.00 g/cc.

13. The battery cell of any one of the preceding claims, wherein the electrolyte solution has an ionic conductivity of 7.2 mS/cm to 7.7 mS/cm.

14. The battery cell of any one of the preceding claims, wherein the lithium salt has a concentration of 1.5 M to 2.0 M.

15. A rechargeable lithium battery, comprising the battery cell according to any one of claims 1 to 14 and a pouch-type case which accommodates the battery cell.

FIG. 1

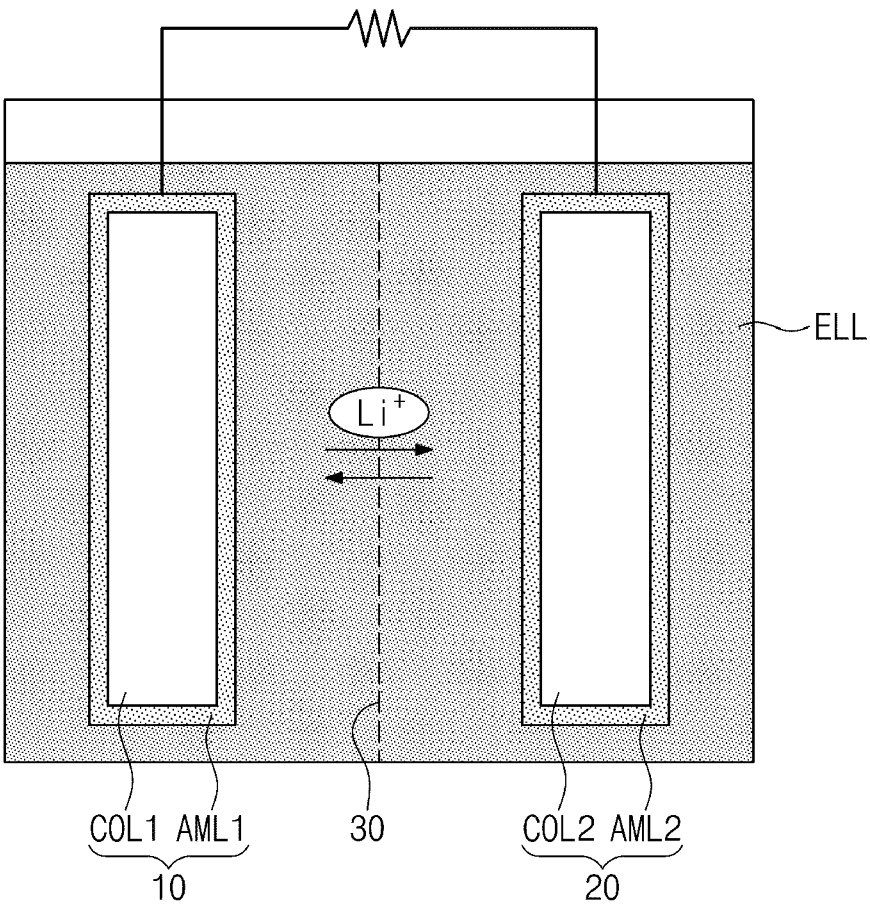

FIG. 2

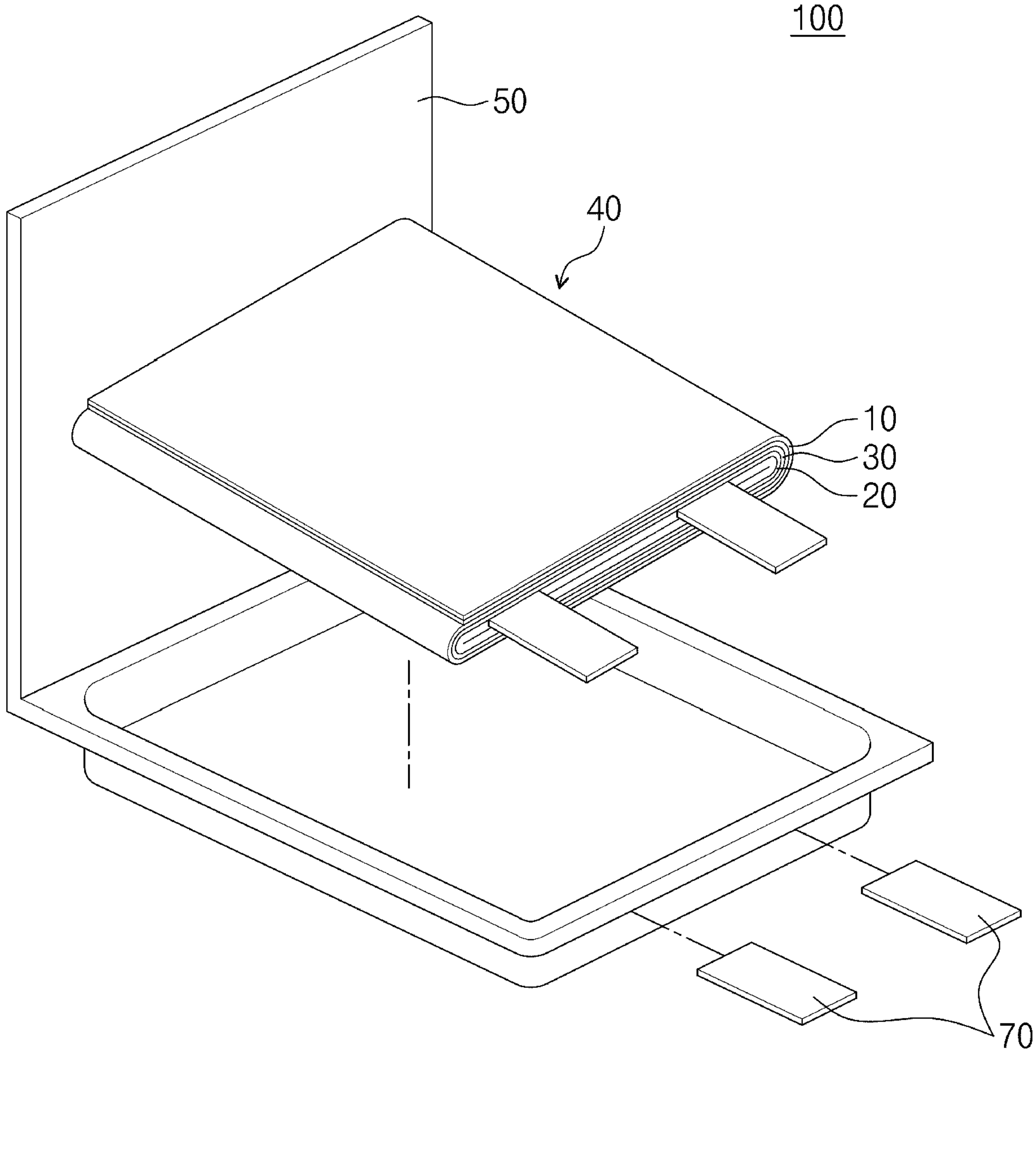

FIG. 3

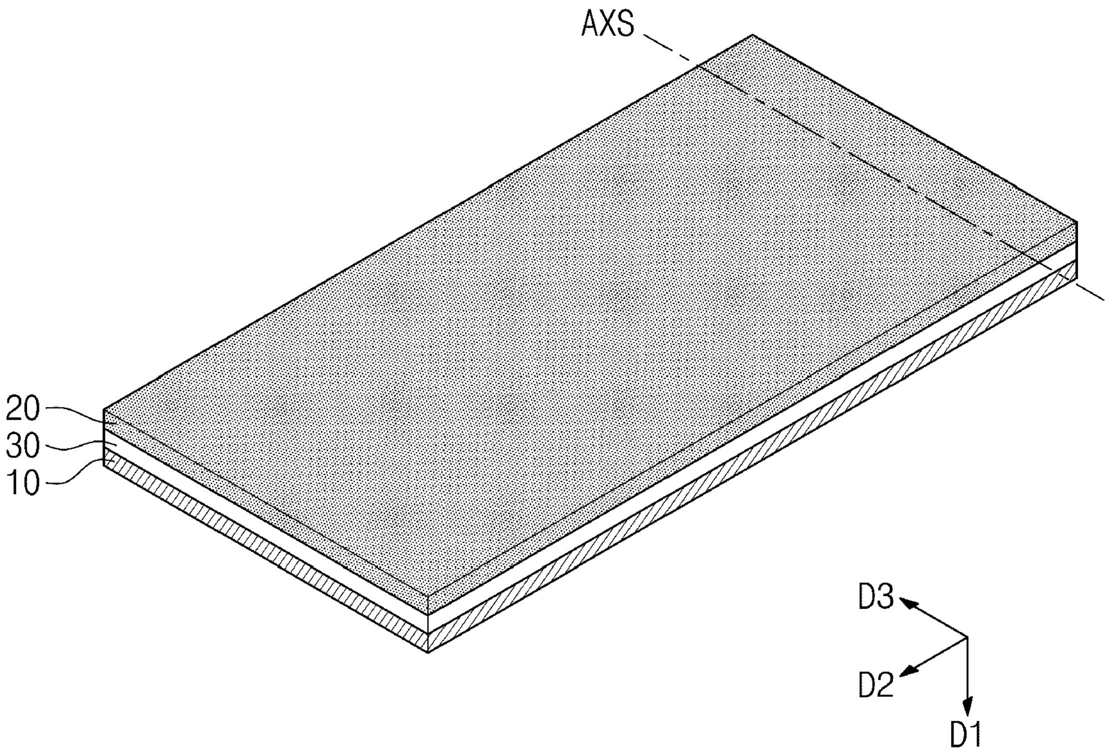

FIG. 4

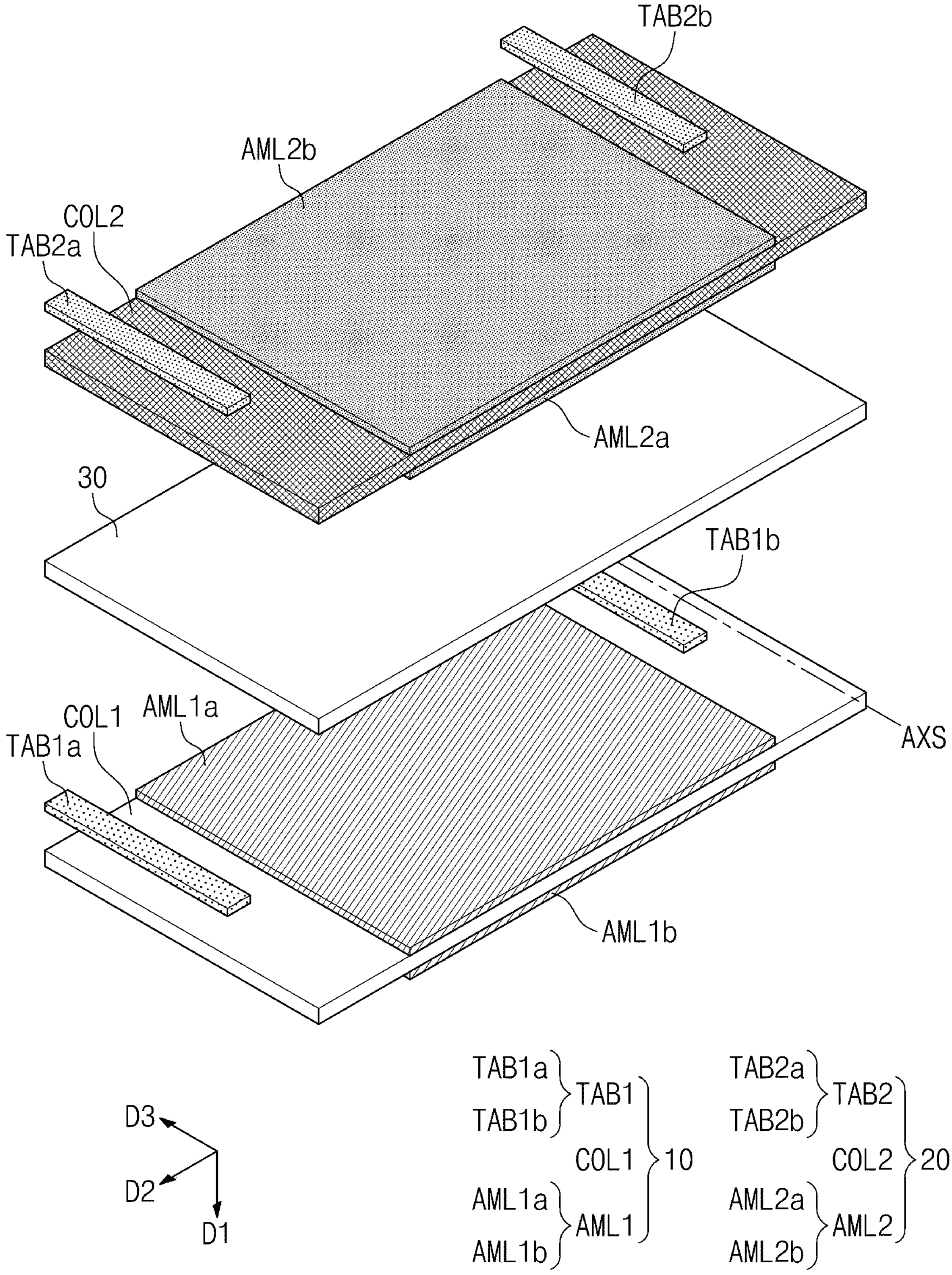
TAB2b
AML2b
COL2
TAB2a
AML2a
30
TAB1b
AXS
COL1
AML1a
TAB1a
AML1b
D3
D2
D1
TAB1a
TAB1b
TAB1
COL1
10
AML1a
AML1b
AML1
TAB2a
TAB2b
TAB2
COL2
20
AML2a
AML2b
AML2

FIG. 5

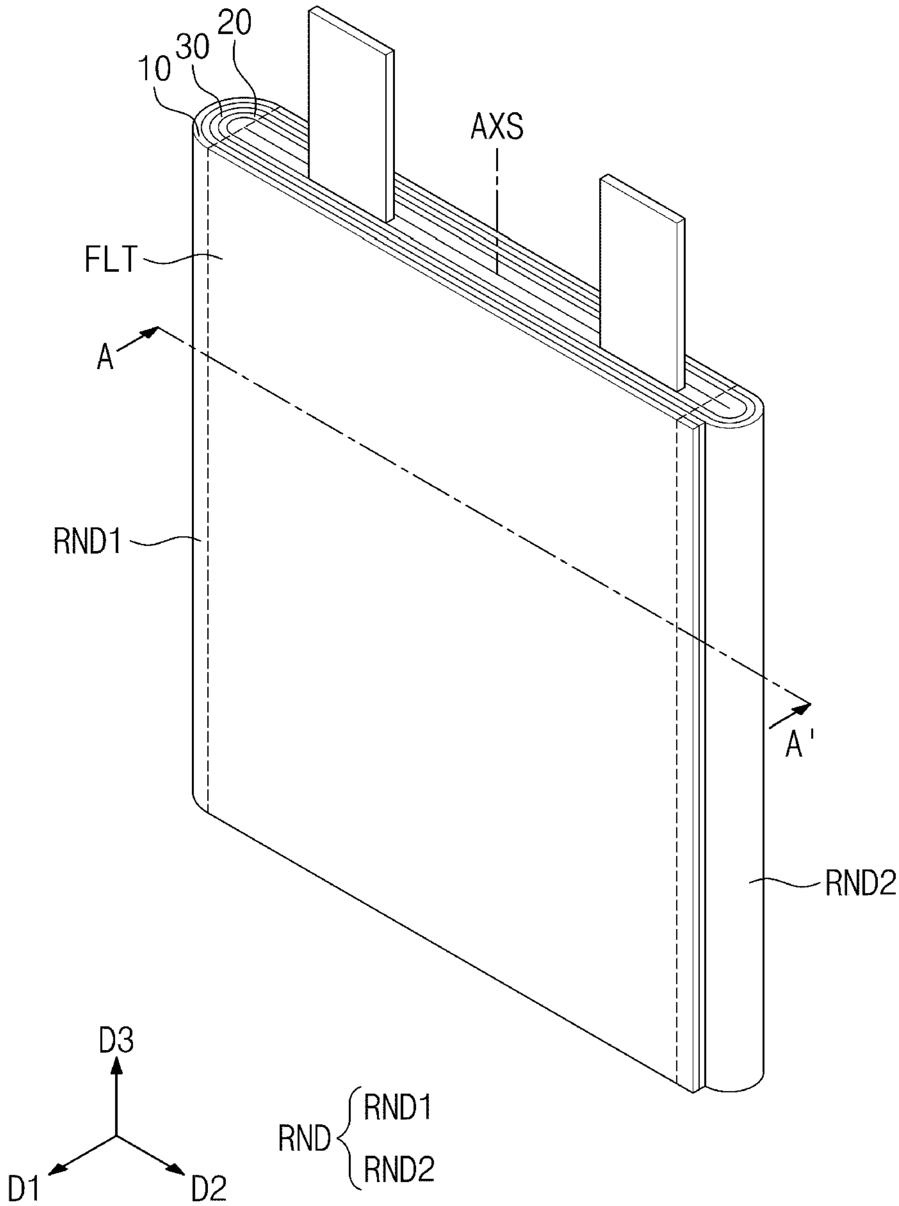

FIG. 6

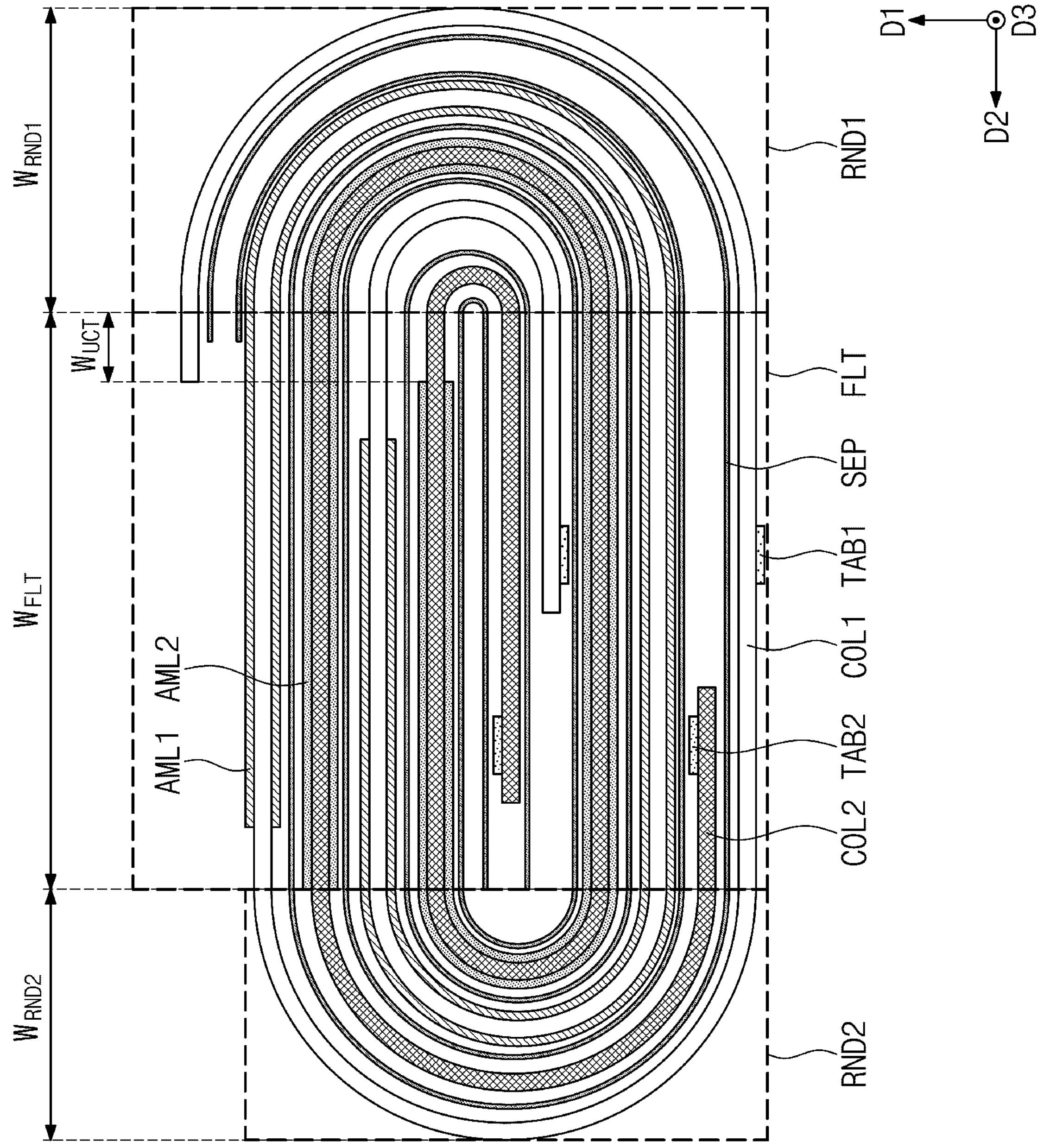
W_RND1
W_UCT
W_FLT
W_RND2
AML1
AML2
RND1
FLT
SEP
TAB1
COL1
TAB2
COL2
RND2
D1
D2
D3

FIG. 7

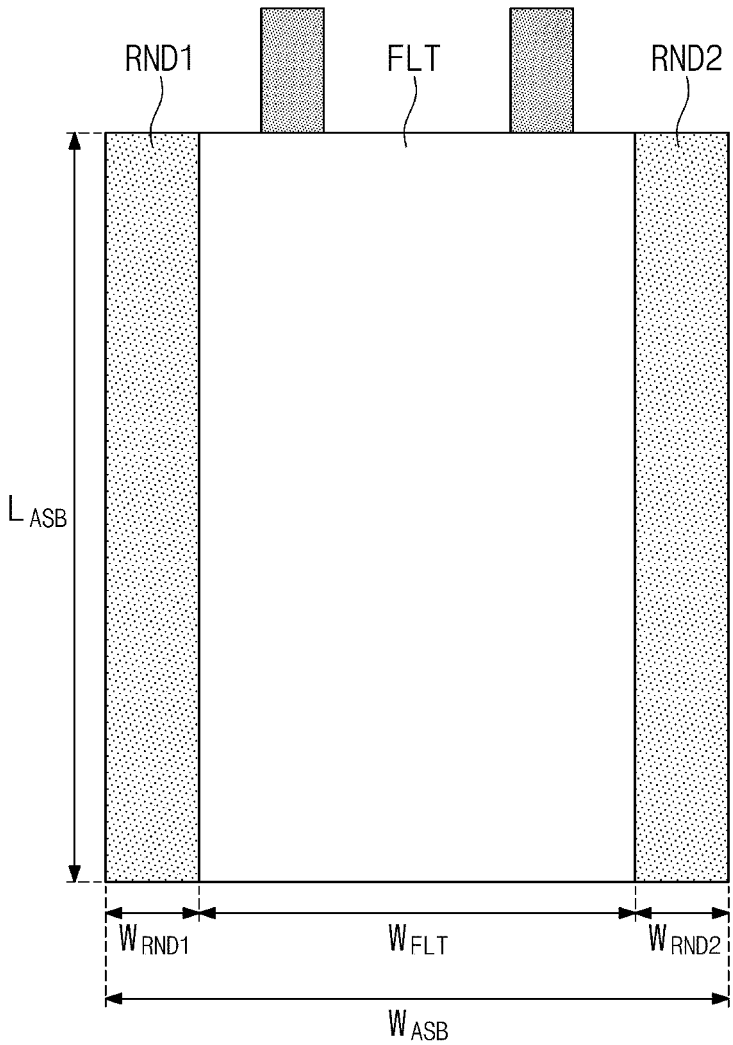

FIG. 8

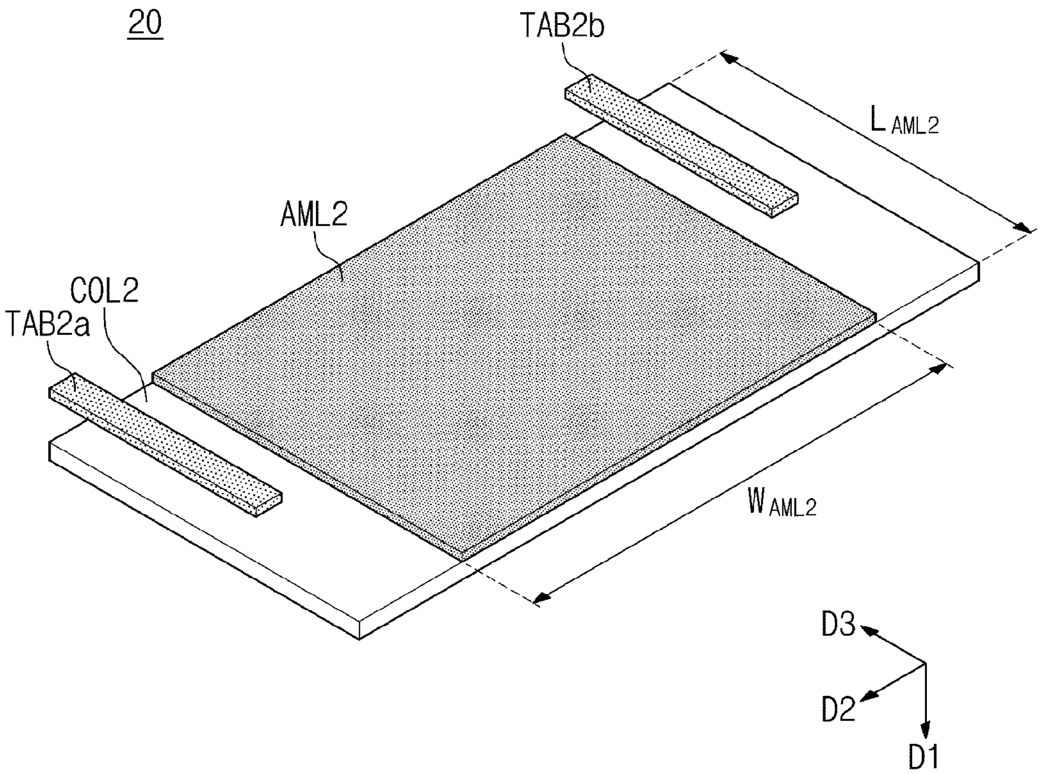
20
TAB2b
$L_{AML2}$
AML2
COL2
TAB2a
$W_{AML2}$
D3
D2
D1

FIG. 9

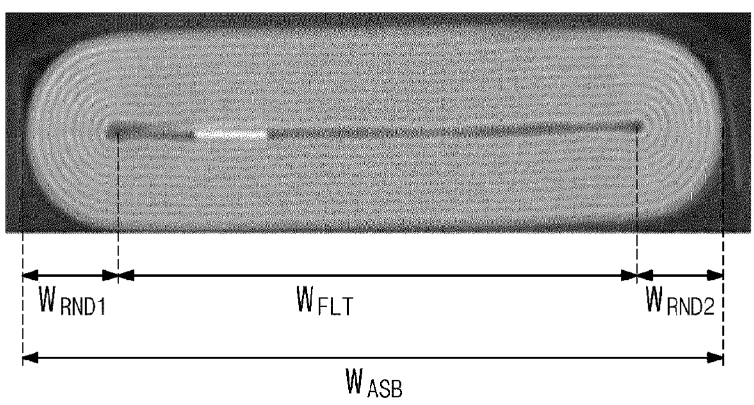
$W_{RND1}$
$W_{FLT}$
$W_{RND2}$
$W_{ASB}$

FIG. 10

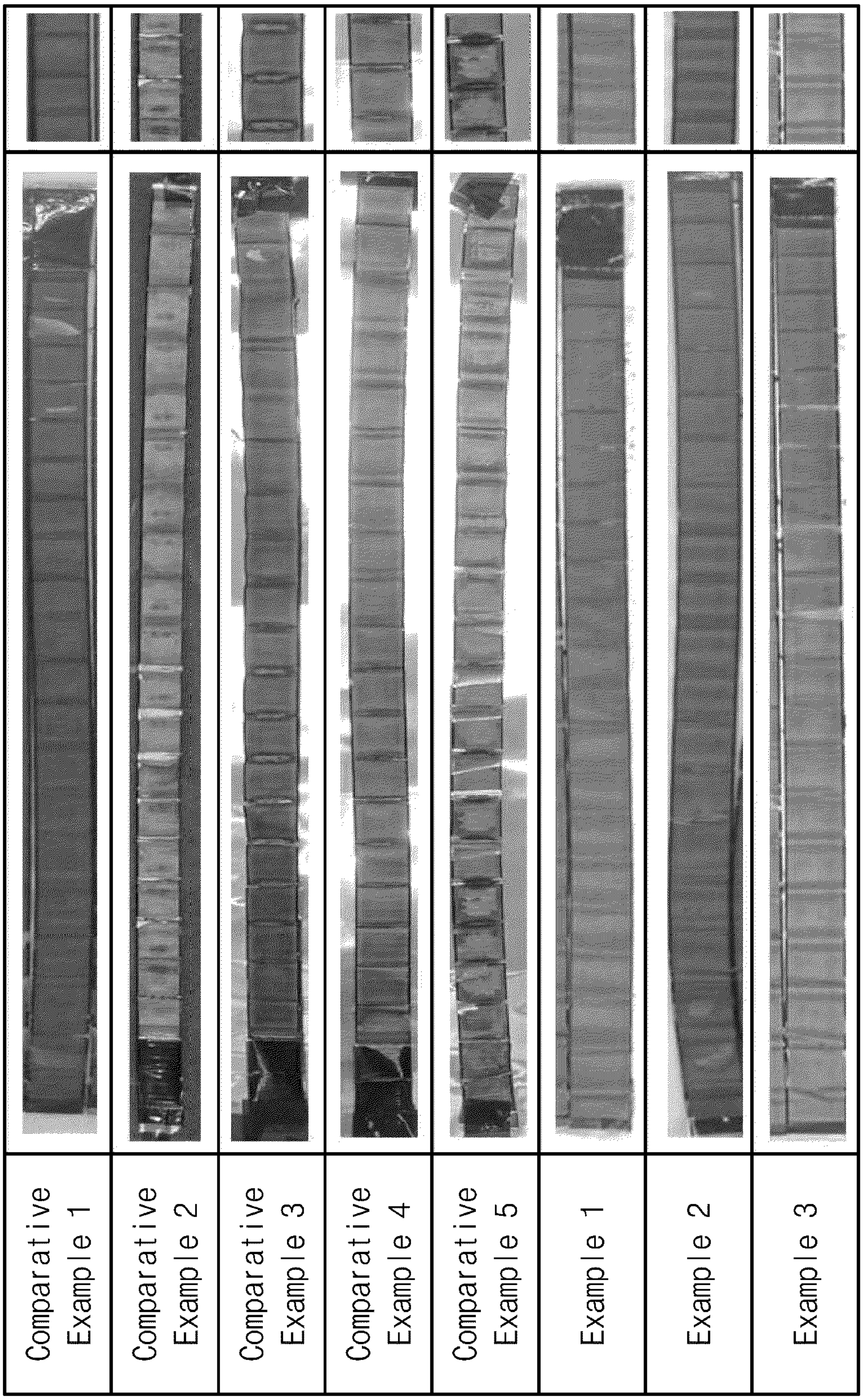
Comparative Example 1
Comparative Example 2
Comparative Example 3
Comparative Example 4
Comparative Example 5
Example 1
Example 2
Example 3

FIG. 11

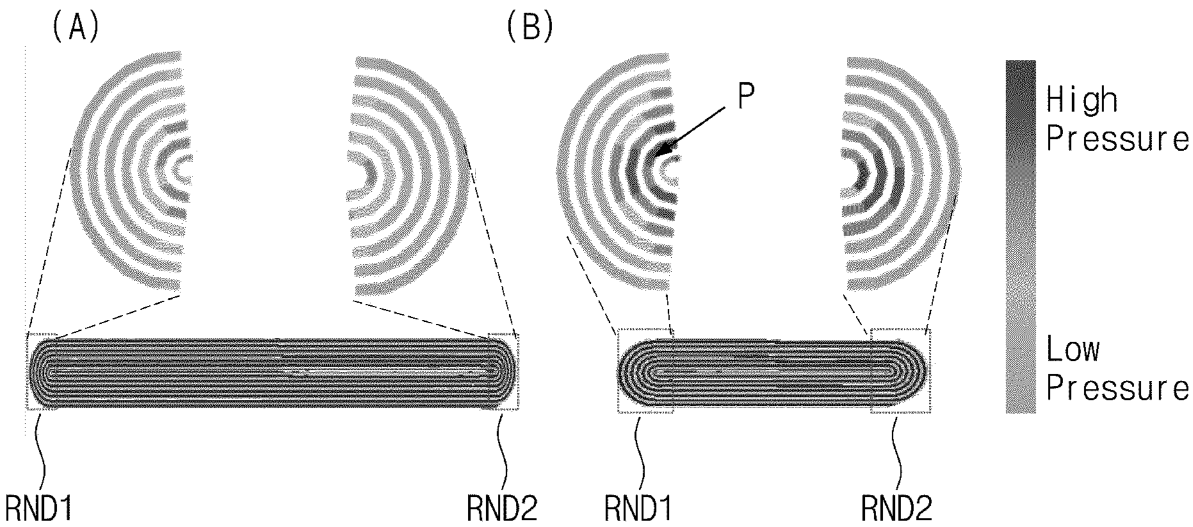

FIG. 12

| | Comparative Example 1 | Comparative Example 2 | Comparative Example 3 | Comparative Example 4 | Comparative Example 5 | Example 1 | Example 2 | Example 3 |
|---|---|---|---|---|---|---|---|---|
| After 1 Minute | 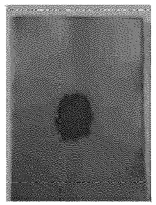 | 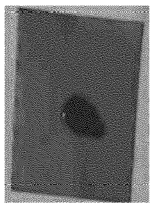 | 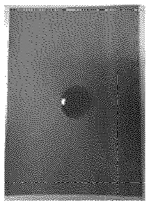 | 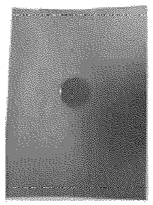 | 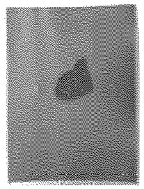 | 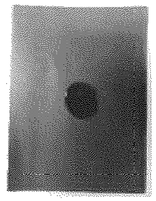 | 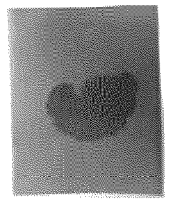 | 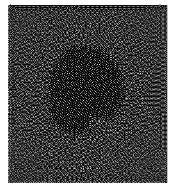 |
| Wettability [point] | 2 | 1 | 1 | 1 | 1 | 1 | 5 | 5 |